# EUROPEAN PATENT SPECIFICATION

(11) **EP 3 034 646 B1**
(45) Date of publication and mention of the grant of the patent: **26.06.2019**
(21) Application number: 14836665.1
(22) Date of filing: 12.08.2014
(51) Int. Cl.: C23C 2/02, C21D 9/46, C21D 9/48, C22C 38/38, C23C 2/06, C23C 2/28, C23G 1/08, C25F 1/00, B32B 15/01, C23C 10/02, C23C 10/28, C25F 1/06, C22C 38/02, C22C 38/06, C22C 38/20

(54) **METHOD FOR PRODUCING HIGH-STRENGTH HOT-DIP GALVANIZED STEEL SHEET AND METHOD FOR PRODUCING HIGH-STRENGTH GALVANNEALED STEEL SHEET**
VERFAHREN ZUR HERSTELLUNG VON HOCHFESTEM FEUERVERZINKTEM STAHLBLECH UND VERFAHREN ZUR HERSTELLUNG VON HOCHFESTEM LEGIERTEN FEUERVERZINKTEN STAHLBLECH
PROCÉDÉ DE PRODUCTION DE TÔLE D'ACIER À HAUTE RÉSISTANCE GALVANISÉE PAR IMMERSION À CHAUD ET PROCÉDÉ DE PRODUCTION DE TÔLE D'ACIER À HAUTE RÉSISTANCE GALVANISÉE PAR IMMERSION À CHAUD ET ALLIÉE

(30) Priority: 12.08.2013 JP 2013167385
(43) Date of publication of application: 22.06.2016
(73) Proprietor: JFE Steel Corporation, Tokyo, 100-0011 (JP)
(72) Inventor: MIYATA, Mai, Tokyo 100-0011 (JP); SUZUKI, Yoshitsugu, Tokyo 100-0011 (JP); NAGATAKI, Yasunobu, Tokyo 100-0011 (JP)
(74) Representative: Grünecker Patent- und Rechtsanwälte PartG mbB
(86) International application number: PCT/JP2014/004176
(87) International publication number: WO 2015/022778

(56) References cited:
- EP-A1- 0 657 560
- EP-A1- 1 466 029
- JP-A- H0 881 748
- JP-A- 2000 045 100
- JP-A- 2000 290 730
- JP-A- 2000 290 730
- JP-A- 2001 140 021
- JP-A- 2001 158 918

## Description

### Technical Field

The present invention relates to a method for producing a high-strength hot-dip galvanized steel sheet that is suitable for automotive body components and has a good surface appearance and good adhesion of the coating and to a method for producing a high-strength galvannealed steel sheet.

### Background Art

In recent years, with the increase in global environmental protection awareness, there has been a strong demand for improved mileage in order to reduce CO₂ emissions from automobiles. To satisfy the demand, a strong movement is under way to strengthen steel sheets used as automotive body component materials in order to decrease the thickness of automotive body components and thereby decrease the weight of automotive bodies. However, strengthened steel sheets may have low ductility. Thus, it is desirable to develop high-strength high-ductility steel sheets.

Solid-solution strengthening elements, such as Si, Mn, and/or Cr, have been added to strengthen steel sheets. In particular, Cr in a smaller amount than other elements can strengthen steel sheets. Thus, the addition of Cr is effective in strengthening the material property of steel sheets. However, Cr and such elements are more oxidizable elements than Fe. Thus, there are problems as described below in the production of hot-dip galvanized steel sheets and galvannealed steel sheets based on high-strength steel sheets containing large amounts of such elements.

In general, in order to produce a hot-dip galvanized steel sheet, a steel sheet is heated and then annealed in a nonoxidizing atmosphere or a reducing atmosphere at a temperature in the range of approximately 600°C to 900°C and is then subjected to hot-dip galvanizing treatment. Oxidizable elements in steel are selectively oxidized even in a nonoxidizing atmosphere or reducing atmosphere generally employed, are concentrated on the surface, and form oxides on the surface of the steel sheet. Such oxides lower the wettability of molten zinc on the surface of the steel sheet in hot-dip galvanizing treatment and cause an ungalvanized surface. An increase in the concentration of oxidizable elements in steel drastically lowers the wettability and frequently causes ungalvanized surfaces. Even if ungalvanized surfaces are not formed, oxides existing between the steel sheet and the coating reduce adhesion of the coating.

To address this issue, a method for improving the wettability of molten zinc on a surface of a steel sheet is proposed in Patent Literature 1. This method includes heating a steel sheet in an oxidizing atmosphere in advance to rapidly form an iron oxide film on a surface of the steel sheet at an oxidation rate equal to or higher than a predetermined value, thereby preventing oxidation of additive elements on the surface of the steel sheet, and thereafter subjecting the iron oxide film to reduction annealing. However, if a steel sheet is excessively oxidized, iron oxide adheres to a hearth roll and causes a problem of indentation flaws on the steel sheet.

A method proposed in Patent Literature 2 includes pickling a steel sheet after annealing to remove oxides from the surface and thereafter annealing again and hot-dip galvanizing the steel sheet. However, oxides that are insoluble in acids cannot be removed in Patent Literature 2. Thus, the appearance of the coating of steel sheets containing Cr that forms an oxide insoluble in acids cannot be improved.

A method proposed in Patent Literature 3 includes immersing a steel sheet in an alkaline molten salt bath after annealing to remove silicon-based oxides, then annealing the steel sheet again, and hot-dip galvanizing the steel sheet. However, electrolytic treatment is not performed in Patent Literature 3. Thus, chromium oxide cannot be removed, and the appearance of the coating of steel sheets containing Cr cannot be improved.

Patent Literature 4 discloses a method for manufacturing a high strength galvanized steel sheet excellent in coating adhesion. Patent Literature 5 discloses an electrolytic cleaning method for manufacturing a hot dipped hot rolled steel plate free from defects such as bear spots. The electrolytic cleaning prevents surface concentration of Si, Mn and Cr so that an excellent plating layer can be formed on the steel plate.

### Citation List

### Patent Literature

PTL 1: Japanese Patent No. 2587724
PTL 2: Japanese Patent No. 3956550
PTL 3: Japanese Unexamined Patent Application Publication No. 2001-158918
PTL 4: JP 2001 140021 A
PTL 5: JP H08 81748 A

### Summary of Invention

### Technical Problem

In view of such situations, it is an object of the present invention to solve problems caused by oxides formed on a surface of a steel sheet containing Cr and provide a method for producing a high-strength hot-dip galvanized steel sheet having good adhesion of the coating and a good surface appearance and a method for producing a high-strength galvannealed steel sheet.

### Solution to Problem

The present inventors found the following on the basis of extensive studies on the production of a steel sheet containing Cr and having a good surface appearance and good adhesion of the coating.

Annealing of a steel sheet forms chromium oxide on the surface of the steel sheet and forms a low Cr concentration region in a surface layer of the steel sheet. If chromium oxide on the surface can be removed, because of the low concentration of Cr in the surface layer of the steel sheet, another annealing forms less chromium oxide, that is, a suppressed amount of chromium oxides on the surface of the steel sheet. However, chromium oxides are insoluble in acids, as described above. Thus, in order to solve problems caused by chromium oxide by a method for removing chromium oxide from the surface, chromium oxide on the surface must be removed by a method other than acid dissolution. The term a "surface layer" of steel sheets, as used herein, refers to a layer having a thickness of 10 µm or less directly under the surface of the steel sheets.

In an electric potential-pH diagram of Cr, chromic acid is stable in a wide acidic to alkaline region on a high electric potential side. That is, chromium oxide can be converted into chromic acid in an aqueous solution by application of a high electric potential to be dissolved in the aqueous solution. Chromic acid is formed at a lower electric potential in an alkaline region than in an acidic region. Thus, the present inventors made extensive studies on the assumption that the appearance of the coating of steel sheets containing Cr can be improved by removing chromium oxide by converting it into chromic acid dissolved in an alkaline aqueous solution. Consequently, it was found that chromium oxide can be removed by electrolytic treatment using a steel sheet as an anode in an alkaline aqueous solution. Chromium oxide on a surface of a steel sheet can be removed even in a short electrolytic treatment time. Further, chromium oxide at grain boundaries in steel sheets can also be removed in an electrolytic treatment time of 2 seconds or more. This particularly improves the adhesion of the coating of hot-dip galvanized steel sheets.

The present invention is based on these findings and has the features defined in the claims.

### Advantageous Effects of Invention

The present invention provides a high-strength hot-dip galvanized steel sheet and a high-strength galvannealed steel sheet each having high strength, a good surface appearance, and good adhesion of the coating. For example, application of a high-strength hot-dip galvanized steel sheet according to the present invention to automobile structural members can improve mileage due to weight reduction of automotive bodies.

### Description of Embodiments

Embodiments of the present invention will be described below. The present invention is not limited to these embodiments. The symbol "%" that represents the amount of component refers to "% by mass".

### <First Embodiment>

First, a steel sheet that is used as a raw material in a production method according to a first embodiment of the present invention will be described below. The steel sheet used as a raw material contains C: 0.040% to 0.500%, Si: 1.00% or less, Cr: 0.10% to 2.00%, Mn: 0.80-5.00%, P: 0.100% or less, S: 0.0100% or less, and Al: 0.100% or less on a mass percent basis, and the remainder is Fe and incidental impurities. In addition to these components, the steel sheet may contain at least one element selected from Mo: 0.01% to 0.50%, Nb: 0.010% to 0.100%, B: 0.0001% to 0.0050%, and Ti: 0.010% to 0.100% on a mass percent basis. In addition to these components, the steel sheet may contain at least one element selected from Cu: 1.00% or less, V: 0.500% or less, Ni: 0.50% or less, N: 0.0100% or less, Sb: 0.10% or less, Sn: 0.10% or less, Ca: 0.0100% or less, and REM: 0.010% or less on a mass percent basis. Each of the components listed above will be described below.

### C: 0.040% to 0.500%

C is an austenite formation element, forms a composite microstructure in an annealed sheet, and is effective in improving strength and ductility. In order to improve strength and ductility, the C content is 0.040% or more. However, a C content of more than 0.500% results in marked hardening of a welded portion and a heat-affected zone, degradation of the mechanical characteristics of the welded portion, poor spot weldability, and poor arc weldability. Thus, the C content is 0.500% or less.

### Si: 1.00% or less

Si is a ferrite formation element and is effective in improving the solid-solution strengthening and work hardenability of ferrite in annealed sheets. A Si content of more than 1.00% results in the formation of silicon oxide on a surface of a steel sheet during annealing and consequently poor coatability. Thus, the Si content is 1.00% or less. The Si content may be 0%.

### Cr: 0.10% to 2.00%

Cr is an austenite formation element and is effective in securing the strength of annealed sheets. In order to secure the strength, the Cr content is 0.10% or more. However, a Cr content of more than 2.00% results in insufficient removal of chromium oxide from a surface layer of a steel sheet even utilizing the present invention, resulting in a poor appearance of the coating. Thus, the Cr content is 2.00% or less.

In the production method according to the first embodiment, the remainder may be Fe and incidental impurities. As described above, the steel sheet used as a raw material in the production method according to the first embodiment may contain the following components in addition to the components described above.

### Mn: 0.80-5.00%

Mn is an austenite formation element and is effective in securing the strength of annealed sheets. In order to secure the strength, the Mn content is 0.80% or more. However, a Mn content of more than 5.00% may result in a poor appearance of the coating due to a large amount of oxide formed in a surface layer of a steel sheet during annealing. Thus, the Mn content is preferably 5.00% or less.

### P: 0.100% or less

P is an element that is effective in strengthening steel. However, a P content of more than 0.100% may result in embrittlement due to intergranular segregation and low impact resistance. Thus, the P content is preferably 0.100% or less.

### S: 0.0100% or less

S forms an inclusion, such as MnS, and thereby lowers impact resistance or causes a crack along a metal flow in a welded portion. Thus, the S content is preferably minimized. The S content is preferably 0.0100% or less.

### Al: 0.100% or less

Excessive addition of Al results in low surface quality or poor formability due to an increased oxide inclusion and is responsible for increased the cost. Thus, the Al content is preferably 0.100% or less, more preferably 0.050% or less.

### Mo: 0.01% to 0.50%

Mo is an austenite formation element and is effective in securing the strength of annealed sheets. In order to secure the strength, the Mo content is preferably 0.01% or more. Owing to high alloy costs of Mo, a high Mo content may be responsible for increased costs. Thus, the Mo content is preferably 0.50% or less.

### Nb: 0.010% to 0.100%

Nb is an element that contributes to improved strength due to solid-solution strengthening or precipitation strengthening. In order to produce this effect, the Nb content is preferably 0.010% or more. However, a Nb content of more than 0.100% may result in low ductility and poor workability of steel sheets. Thus, the Nb content is preferably 0.100% or less.

### B: 0.0001% to 0.0050%

B improves hardenability and contributes to improved strength of steel sheets. In order to produce this effect, the B content is preferably 0.0001% or more. However, an excessively high B content may result in low ductility and poor workability. An excessively high B content is also responsible for increased costs. Thus, the B content is preferably 0.0050% or less.

### Ti: 0.010% to 0.100%

Ti, together with C or N, forms fine carbide or fine nitride in steel sheets and contributes to improved strength of the steel sheets. In order to produce this effect, the Ti content is preferably 0.010% or more. This effect levels off at a Ti content of more than 0.100%. Thus, the Ti content is preferably 0.100% or less.

### Cu: 1.00% or less, V: 0.500% or less, Ni: 0.50% or less

Cu, V, and Ni are effective in strengthening steel and may be used to strengthen steel within the ranges specified herein. In order to strengthen steel, the Cu content is preferably 0.05% or more, the V content is preferably 0.005% or more, and the Ni content is preferably 0.05% or more. However, an excessively high Cu content of more than 1.00%, an excessively high V content of more than 0.500%, or an excessively high Ni content of more than 0.50% may result in low ductility due to markedly increased strength. An excessively high content with respect to these elements may be responsible for increased costs. Thus, when these elements are added, the Cu content is preferably 1.00% or less, the V content is preferably 0.500% or less, and the Ni content is preferably 0.50% or less.

### N: 0.0100% or less

N reduces the anti-aging effects of steel and is preferably minimized. A N content of more than 0.0100% may result in significantly reduced anti-aging effects. Thus, the N content is preferably 0.0100% or less.

### Sb: 0.10% or less, Sn: 0.10% or less

Sb and Sn can suppress nitriding in the vicinity of a surface of a steel sheet. In order to suppress nitriding, the Sb content is preferably 0.005% or more, and the Sn content is preferably 0.005% or more. This effect levels off at a Sb content or a Sn content of more than 0.10%. Thus, the Sb content is preferably 0.10% or less, and the Sn content is preferably 0.10% or less.

### Ca: 0.0100% or less

Ca is effective in improving ductility due to the shape control of a sulfide, such as MnS. In order to produce this effect, the Ca content is preferably 0.001% or more. This effect levels off at a Ca content of more than 0.0100%. Thus, the Ca content is preferably 0.0100% or less.

### REM: 0.010% or less

REM controls the shape of sulfide-base inclusions and contributes to improved workability. In order to produce the effect of improving workability, the REM content is preferably 0.001% or more. A REM content of more than 0.010% may result in an increased amount of inclusions and poor workability. Thus, the REM content is preferably 0.010% or less.

The remainder is Fe and incidental impurities.

Method for producing the steel sheet used as a raw material in the production method according to the first embodiment is not particularly limited. For example, a steel slab having the composition as described above is heated and then subjected to rough rolling and finish rolling in a hot-rolling step. Then, scales are removed from a surface layer of the hot-rolled steel sheet in a pickling step, and the hot-rolled steel sheet is subjected to cold rolling. The conditions for the hot-rolling step and the conditions for the cold-rolling step are not particularly limited and may be appropriately determined.

The steel sheet used as a raw material is typically produced through such common steps of steel making, casting, and hot rolling as described above. However, for example, part or all of the hot-rolling step may be omitted by using strip casting or the like.

The production method according to the first embodiment will be described below. The production method according to the present embodiment includes a first heating step, a cooling step, an electrolytic treatment step, a second heating step, and a coating treatment step.

### First Heating Step

The first heating step includes holding the steel sheet at a temperature in the range of 700°C to 900°C or in a temperature range of 700°C to 900°C for 20 to 600 seconds in an atmosphere having a H₂ concentration in the range of 0.05% to 25.0% by volume and a dew point in the range of - 45°C to 0°C. In the first heating step, while Fe is not oxidized, Cr is oxidized on the surface of the steel sheet. Consequently, a surface layer containing chromium oxide is formed.

The H₂ concentration should be high enough to suppress the oxidation of Fe and is 0.05% by volume or more. A H₂ concentration of more than 25.0% by volume results in increased costs. Thus, the H₂ concentration is 25.0% by volume or less.

A dew point of less than -45°C results in suppressed oxidation of Cr. A dew point of more than 0°C results in oxidation of Fe. Thus, the dew point ranges from -45°C to 0°C.

A steel sheet temperature of less than 700°C results in no oxidation of Cr. A steel sheet temperature of more than 900°C results in high heating costs. Thus, the heating temperature of the steel sheet (steel sheet temperature) is a temperature in the range of 700°C to 900°C or in a temperature range of 700°C to 900°C. Holding in the first heating step may be holding of the steel sheet at a constant temperature or may be holding of the steel sheet at varying temperatures.

A holding time of less than 20 seconds results in insufficient formation of chromium oxide on the surface. A holding time of more than 600 seconds causes low electrolytic treatment efficiency due to excessive formation of chromium oxide and results in low production efficiency. Thus, the holding time ranges from 20 to 600 seconds.

### Electrolytic Treatment Step

The electrolytic treatment step includes subjecting the steel sheet after the first heating step to electrolytic treatment in an alkaline aqueous solution at a Coulomb density (charge density) in the range of 1.0 to 400 C/dm², where the steel sheet acts as an anode.

The electrolytic treatment step is performed in order to remove chromium oxide formed in the first heating step from the surface layer. Therefore, the steel sheet acts as an anode for electrolytic treatment. A Coulomb density of less than 1.0 C/dm² results in insufficient removal of chromium oxide. A Coulomb density of more than 400.0 A/dm² results in greatly increased costs. Thus, the Coulomb density ranges from 1.0 to 400.0 C/dm². A short electrolytic treatment time may result in insufficient removal of chromium oxide formed at grain boundaries in the steel sheet and poor adhesion of the coating. In order to further improve the adhesion of the coating, the electrolytic treatment time is preferably 2 seconds or more, more preferably 5 seconds or more. Although the electrolytic treatment time has no particular upper limit, a long treating time results in high costs, and therefore the electrolytic treatment time is preferably 60 seconds or less.

Examples of the alkaline aqueous solution used in the electrolytic treatment step include aqueous solutions containing NaOH, Ca(OH)₂, or KOH.

### Second Heating Step

The second heating step includes holding the resultant steel sheet after the electrolytic treatment step at a temperature in the range of 650°C to 900°C or in a temperature range of 650°C to 900°C for 15 to 300 seconds in an atmosphere having a H₂ concentration in the range of 0.05% to 25.0% by volume and a dew point of 0°C or less. The second heating step is performed to facilitate coating (particularly hot-dip coating) of the steel sheet.

The H₂ concentration should be high enough to suppress oxidation of Fe and is 0.05% by volume or more. A H₂ concentration of more than 25.0% by volume results in increased costs. Thus, the H₂ concentration is 25.0% by volume or less.

A dew point of more than 0°C results in oxidation of Fe. Thus, the dew point is 0°C or less. The dew point has no particularly lower limit. The dew point is preferably -60°C or more in terms of industrial practice.

A steel sheet temperature of less than 650°C results in no activation of the surface of the steel sheet and poor molten zinc wettability. A steel sheet temperature of more than 900°C results in formation of an oxide of Cr on the surface during annealing, formation of a surface layer containing chromium oxide, and poor wettability of the steel sheet with molten zinc. Thus, the heating temperature of the steel sheet (steel sheet temperature) is a temperature in the range of 650°C to 900°C or in a temperature range of 650°C to 900°C. In the second heating step, the steel sheet may be held at a constant temperature or at varying temperatures.

A holding time of less than 15 seconds results in insufficient activation of the surface of the steel sheet. A holding time of 300 seconds or more results in formation of an oxide of Cr on the surface of the steel sheet again, formation of a surface layer containing chromium oxide, and poor molten zinc wettability. Thus, the holding time ranges from 15 to 300 seconds.

### Coating Treatment Step

For example, the coating treatment step includes cooling the steel sheet after the treatment described above and immersing the steel sheet in a hot-dip galvanizing bath to perform hot-dip galvanizing.

For the production of hot-dip galvanized steel sheets, the bath temperature preferably ranges from 440°C to 550°C, and the concentration of Al in the galvanizing bath preferably ranges from 0.13% to 0.24%. The symbol "%" with respect to the Al concentration refers to "% by mass".

A bath temperature of less than 440°C may be inappropriate because temperature variations in the bath may cause solidification of Zn in a low-temperature portion. A bath temperature of more than 550°C may result in rapid evaporation from the bath and deposition of vaporized Zn on the inner side of the furnace, thereby causing operational problems. This also tends to result in over-alloying because alloying proceeds during coating.

In the production of a hot-dip galvanized steel sheet, when the concentration of Al in the bath is less than 0.14%, this may result in poor adhesion of the coating due to Fe-Zn alloying. When the concentration of Al in the bath is more than 0.24%, aluminum oxide may cause a defect.

### Other Steps

A method for producing a high-strength hot-dip galvanized steel sheet according to the present invention may include other steps, provided that these steps do not reduce the advantages of the present invention. For example, another step may be performed between the steps, before the first heating step, or after the coating treatment step. A specific example that includes another step will be described below in each of the second embodiment and thereafter. Another step is not limited to the step described in each of the second embodiment and embodiments thereafter.

### <Second Embodiment>

First, a steel sheet that is used as a raw material in a production method according to a second embodiment of the present invention will be described below. The steel sheet used as a raw material contains C: 0.040% to 0.500%, Si: 1.00% or less, Cr: 0.10% to 2.00%, Mn: 0.80-8.00%, P: 0.100% or less, S: 0.0100% or less, and Al: 0.100% or less on a mass percent basis, and the remainder is Fe and incidental impurities. The steel sheet may further contain at least one element selected from Mo: 0.01% to 0.50%, Nb: 0.010% to 0.100%, B: 0.0001% to 0.0050%, and Ti: 0.010% to 0.100% on a mass percent basis. The steel sheet may further contain at least one element selected from Cu: 1.00% or less, V: 0.500% or less, Ni: 0.50% or less, N: 0.0100% or less, Sb: 0.10% or less, Sn: 0.10% or less, Ca: 0.0100% or less, and REM: 0.010% or less on a mass percent basis.

The components other than Mn are the same as in the first embodiment and will not be described. The method for producing the steel sheet used as a raw material is also the same as in the first embodiment and will not be described.

### Mn: 0.80-8.00%

Like Cr, Mn is oxidized on the surface of the steel sheet in the annealing step and forms a surface layer containing manganese oxide. Because use of Cr increases production costs, Mn, which is similar to Cr in the effects on the material quality, is often added together with Cr. Manganese oxide cannot be removed by alkaline electrolytic treatment, which can remove chromium oxide. However, oxides containing Mn are soluble in acids and can therefore be removed by pickling the surface of the steel sheet after the electrolytic treatment.

Mn is an austenite formation element and is effective in securing the strength of annealed sheets. In order to secure the strength, the Mn content is 0.80% or more. However, a Mn content of more than 8.00% may result in insufficient removal of manganese oxide from the surface by pickling. A Mn content of more than 8.00% results in oxidation of a large amount of Mn on the surface of the steel sheet during reannealing, formation of a surface layer containing a large amount of oxide, and a poor appearance of the coating. Thus, the Mn content is 8.00% or less.

A production method according to the second embodiment will be described below. The production method according to the second embodiment includes a first heating step, a cooling step, an electrolytic treatment step, a pickling step after the electrolytic treatment, a second heating step, and a coating treatment step.

Unlike the production method in the first embodiment, the production method in the present embodiment includes the pickling step after the electrolytic treatment. The first heating step, cooling step, electrolytic treatment step, second heating step, and coating treatment step are the same as in the first embodiment and will not be described.

### Pickling Step after Electrolytic Treatment

The pickling step after the electrolytic treatment includes, before the second heating step, pickling the surface of the steel sheet after the electrolytic treatment step such that the pickling weight loss ranges from 0.05 to 5 g/m² on an Fe basis. This step is performed to clean the surface of the steel sheet. This step is also performed to remove oxides that are formed on the surface of the steel sheet in the first heating step and are soluble in acids.

A pickling weight loss of less than 0.05 g/m² on an Fe basis may result in insufficient removal of oxides. A pickling weight loss of more than 5 g/m² may result in dissolution of not only oxides on the surface layer of the steel sheet but also an inner portion of the steel sheet where Cr concentration has been decreased, and thus may fail to suppress the formation of chromium oxide in the second heating step. Thus, the pickling weight loss ranges from 0.05 to 5 g/m² on an Fe basis.

### <Third Embodiment>

First, a steel sheet that is used as a raw material in a production method according to a third embodiment of the present invention will be described below. The steel sheet used as a raw material contains C: 0.040% to 0.500%, Si: 1.00% or less, Cr: 0.10% to 3.00%, Mn: 0.80-8.00%, P: 0.100% or less, S: 0.0100% or less, and Al: 0.100% or less on a mass percent basis, and the remainder is Fe and incidental impurities. The steel sheet may further contain at least one element selected from Mo: 0.01% to 0.50%, Nb: 0.010% to 0.100%, B: 0.0001% to 0.0050%, and Ti: 0.010% to 0.100% on a mass percent basis. The steel sheet may further contain at least one element selected from Cu: 1.00% or less, V: 0.500% or less, Ni: 0.50% or less, N: 0.0100% or less, Sb: 0.10% or less, Sn: 0.10% or less, Ca: 0.0100% or less, and REM: 0.010% or less on a mass percent basis.

The above described steel sheet used in the third embodiment is substantially the same as the steel sheet used as a raw material in the production method in the second embodiment. Thus, the components other than Cr and the production method of the steel sheet will not be described.

### Cr: 0.10% to 3.00%

Cr is an austenite formation element and is effective in securing the strength of annealed sheets. In order to secure the strength, the Cr content is 0.10% or more. A Cr content of more than 3.00% results in insufficient removal of chromium oxide from the surface of the steel sheet even utilizing the third embodiment, resulting in a poor appearance of the coating. Thus, the Cr content is 3.00% or less.

A production method according to the third embodiment will be described below. The production method according to the third embodiment includes a first heating step, a cooling step, a pickling step before electrolytic treatment, an electrolytic treatment step, a second heating step, and a coating treatment step. The first heating step, cooling step, electrolytic treatment step, second heating step, and coating treatment step are the same as in the first embodiment and will not be described.

### Pickling Step before Electrolytic Treatment

The pickling step before electrolytic treatment includes, before the electrolytic treatment step, pickling a surface of the steel sheet after the cooling step such that the pickling weight loss ranges from 0.05 to 5 g/m² on an Fe basis. This step is performed to clean the surface of the steel sheet. This step is also performed to remove oxides that are formed on the surface of the steel sheet in the first heating step and are soluble in acids.

A surface layer containing manganese oxide and chromium oxide is formed on the surface of the steel sheet after annealing. Manganese oxide is formed closer to the outermost side, and chromium oxide is formed closer to the steel sheet. Thus, as in the present embodiment, chromium oxide can be more effectively removed in the electrolytic treatment step by pickling the surface of the steel sheet before the electrolytic treatment step to remove manganese oxide.

A pickling weight loss of less than 0.05 g/m² on an Fe basis may result in insufficient removal of oxides. A pickling weight loss of more than 5 g/m² may result in dissolution of not only oxides on the surface layer of the steel sheet but also an inner portion of the steel sheet that has a low Cr concentration, thus failing to suppress the formation of chromium oxide in the second heating step. Thus, the pickling weight loss ranges from 0.05 to 5 g/m² on an Fe basis.

The production method may include both the pickling step after the electrolytic treatment described in the production method according to the second embodiment and the pickling step before electrolytic treatment.

### <Fourth Embodiment>

A production method according to a fourth embodiment further includes an alloying treatment step after the coating treatment step of the first, second, or third embodiment.

In the production method in the fourth embodiment, the alloying treatment step is preferably performed after the following coating treatment step.

### Coating Treatment Step

For the production of high-strength galvannealed steel sheets, the bath temperature preferably ranges from 440°C to 550°C, and the concentration of Al in the galvanizing bath preferably ranges from 0.10% to 0.20%.

A bath temperature of less than 440°C may be inappropriate because variations in the bath temperature may cause solidification of Zn in a low-temperature portion. A bath temperature of more than 550°C may result in rapid evaporation from the bath and deposition of vaporized Zn on the furnace, thereby causing operational problems. A bath temperature of more than 550°C also tends to result in over-alloying because alloying proceeds during coating.

When the concentration of Al in the bath is less than 0.10%, this may result in the formation of a large amount of ζ phase and a poor powdering property. When the concentration of Al in the bath is more than 0.20%, Fe-Zn alloying may not proceed.

### Alloying Treatment Step

Although the conditions for the alloying treatment are not particularly limited, the alloying treatment temperature is most preferably more than 460°C and less than 580°C. An alloying treatment temperature of 460°C or less results in slow alloying. An alloying treatment temperature of 580°C or more causes excessive formation of a hard and brittle Zn-Fe alloy layer at an interface with the base metal due to over-alloying and results in poor adhesion of the coating.

### EXAMPLES

### EXAMPLE 1

Steel having the composition listed in Table 1, the remainder being Fe and incidental impurities, was produced in a converter and was formed into a slab in a continuous casting process. The slab was heated to 1200°C, was then hot-rolled to a thickness in the range of 2.3 to 4.5 mm, and was coiled. The hot-rolled steel sheet was then pickled and, if necessary, was cold-rolled. The first heating step, electrolytic treatment step, and second heating step were then performed under the heat-treatment conditions listed in Table 2 (Tables 2-1 and 2-2 are collectively referred to as Table 2) or Table 3 (Tables 3-1 and 3-2 are collectively referred to as Table 3) in a furnace in which the atmosphere could be adjusted (the temperature in the first heating step and the temperature in the second heating step were in the temperature ranges around the temperatures listed in the tables (the temperatures listed in the tables ± 20°C), respectively). Hot-dip galvanizing treatment was subsequently performed in a Zn bath containing 0.13% to 0.24% Al to produce a hot-dip galvanized steel sheet. After hot-dip galvanizing treatment was performed in a Zn bath containing 0.10% to 0.20% Al, alloying treatment was performed under the conditions listed in Table 2 to produce a galvannealed steel sheet.

The surface appearance and adhesion of the coating of the hot-dip galvanized steel sheet and galvannealed steel sheet thus produced were examined by the following methods.

### <Surface Appearance>

The steel sheets were visually inspected for appearance deficiencies, such as ungalvanized surfaces and pinholes. Steel sheets having no appearance deficiencies were rated as good (circle). Steel sheets having generally good appearances with a few appearance deficiencies were rated as fair (triangle). Steel sheets having appearance deficiencies were rated as poor (cross).

### <Adhesion Of The Coating>

Adhesion of the coating of galvannealed steel sheets was evaluated in terms of powdering resistance. More specifically, a cellophane adhesive tape was applied to a galvannealed steel sheet. The surface to which the tape was applied was bent at an angle of 90 degrees and was bent back. A cellophane adhesive tape having a width of 24 mm was applied to and pressed against the inside of a processed portion (compressed side) parallel to the bent-processed portion and was then peeled off. The amount of zinc adhered to a portion of the cellophane adhesive tape having a length of 40 mm was measured as a Zn count using fluorescent X-rays. The Zn count per unit length (1 m) was rated according to the following criteria. The rank 1 is good (circle), the rank 2 is fair (triangle), and the rank 3 or more are poor (cross).

### Fluorescent X-rays count rank

0 or more and less than 500: 1 (good)
500 or more and less than 1000: 2
1000 or more and less than 2000: 3
2000 or more and less than 3000: 4
3000 or more: 5 (poor)

Unalloyed hot-dip galvanized steel sheets were subjected to a ball impact test. Adhesion of the coating was evaluated by peeling off a processed portion with a cellophane adhesive tape and by visually inspecting the processed portion for peeling of the coated layer. In the ball impact test, the mass of the ball was 1.8 kg, and the drop height was 100 cm.
Circle: No peeling of the coated layer
Cross: Peeling of the coated layer

Table 2 shows the evaluation results.

### [Table 1]

**Table 1**

| (mass%) | | | | | | | | | | | | | | | | | | | |
|---|---|---|---|---|---|---|---|---|---|---|---|---|---|---|---|---|---|---|---|
| Steel type symbol | C | Si | Mn | P | S | Al | N | Cr | Mo | B | Ti | Nb | Ni | Cu | V | Sb | Sn | Ca | REM |
| A | 0.089 | 0.15 | 2.66 | 0.005 | 0.0010 | 0.031 | 0.0036 | 0.61 | 0.09 | 0.0009 | 0.023 | 0.039 | - | - | - | - | - | - | - |
| B | 0.086 | 0.16 | 2.58 | 0.008 | 0.0010 | 0.030 | 0.0031 | 0.58 | 0.10 | 0.0010 | 0.018 | 0.032 | - | - | - | - | - | - | - |
| C | 0.091 | 0.16 | 2.34 | 0.009 | 0.0008 | 0.033 | 0.0029 | 0.14 | 0.34 | 0.0010 | 0.021 | 0.042 | - | - | - | - | - | - | - |
| D | 0.083 | 0.13 | 2.32 | 0.006 | 0.0023 | 0.032 | 0.0030 | 1.35 | 0.08 | 0.0008 | 0.033 | 0.035 | - | - | - | - | - | - | - |
| E | 0.085 | 0.05 | 2.53 | 0.004 | 0.0008 | 0.024 | 0.0033 | 1.86 | 0.21 | 0.0010 | 0.025 | 0.032 | - | - | - | - | - | - | - |
| F | 0.113 | 0.29 | 2.58 | 0.004 | 0.0018 | 0.003 | 0.0028 | 2.84 | 0.15 | 0.0009 | 0.024 | 0.038 | - | - | - | - | - | - | - |
| G | 0.089 | 0.14 | 0.81 | 0.007 | 0.0015 | 0.032 | 0.0029 | 0.57 | 0.10 | 0.0009 | 0.029 | 0.036 | - | - | - | - | - | - | - |
| H | 0.087 | 0.15 | 231 | 0.004 | 0.0011 | 0.033 | 0.0030 | 0.59 | 0.09 | 0.0008 | 0.035 | 0.041 | - | - | - | - | - | - | - |
| I | 0.083 | 0.17 | 4.57 | 0.004 | 0.0009 | 0.031 | 0.0030 | 0.35 | 0.25 | 0.0010 | 0.029 | 0.040 | - | - | - | - | - | - | - |
| J | 0.085 | 0.17 | 7.68 | 0.007 | 0.0016 | 0.029 | 0.0030 | 0.62 | 0.11 | 0.0011 | 0.024 | 0.040 | - | - | - | - | - | - | - |
| K | 0.088 | 0.01 | 2.19 | 0.009 | 0.0018 | 0.030 | 0.0031 | 0.59 | 0.08 | 0.0007 | 0.022 | 0.036 | - | - | 0.058 | - | - | - | - |
| L | 0.116 | 0.48 | 2.43 | 0.006 | 0.0007 | 0.028 | 0.0030 | 0.64 | 0.02 | 0.0014 | 0.019 | 0.042 | - | 0.05 | - | - | - | - | - |
| M | 0.086 | 0.78 | 2.86 | 0.005 | 0.0019 | 0.029 | 0.0032 | 0.72 | 0.09 | 0.0013 | 0.031 | 0.042 | - | - | - | - | - | - | - |
| N | 0.089 | 0.15 | 2.28 | 0.007 | 0.0026 | 0.031 | 0.0029 | 0.81 | 0.11 | 0.0012 | 0.022 | 0.037 | - | - | - | - | 0.03 | - | - |
| O | 0.084 | 0.16 | 2.34 | 0.006 | 0.0023 | 0.029 | 0.0036 | 0.54 | 0.12 | 0.0010 | 0.033 | 0.035 | 0.22 | - | - | - | - | - | - |
| P | 0.105 | 0.12 | 2.74 | 0.010 | 0.0018 | 0.027 | 0.0035 | 0.25 | 0.10 | 0.0008 | 0.015 | 0.042 | - | - | - | - | - | 0.0008 | - |
| Q | 0.089 | 0.05 | 4.85 | 0.007 | 0.0010 | 0.031 | 0.0031 | 0.48 | 0.12 | 0.0009 | 0.031 | 0.038 | - | - | - | - | - | - | 0.001 |
| R | 0.078 | 0.23 | 2.68 | 0.008 | 0.0031 | 0.030 | 0.0029 | 0.18 | 0.90 | 0.0007 | 0.027 | 0.040 | - | - | - | 0.02 | - | - | - |
| S | 0.086 | 0.55 | 10.80 | 0.005 | 0.0012 | 0.032 | 0.0030 | 1.42 | 0.12 | 0.0010 | 0.022 | 0.038 | - | - | - | - | - | - | - |
| T | 0.091 | 0.16 | 2.35 | 0.005 | 0.0024 | 0.028 | 0.0032 | 3.45 | 0.12 | 0.0009 | 0.023 | 0.044 | - | - | - | - | - | - | - |
| U | 0.089 | 2.84 | 2.54 | 0.009 | 0.0027 | 0.030 | 0.0035 | 0.08 | 0.90 | 0.0011 | 0.029 | 0.038 | - | - | - | - | - | - | - |

### [Table 2-1]

**Table 2-1**

| (Example) | | | | | | | | | | | | | | | | |
|---|---|---|---|---|---|---|---|---|---|---|---|---|---|---|---|---|
| No | Steel | First heating step | | | | Electrolytic treatment | Second heating step | | | | Coating treatment step | Alloying treatment step | Surface appearance | Adhesion | Product | Remarks |
| | | H₂ (%) | Dew point (°C) | Heating temperature (°C) | Holding time (s) | Charge density (C/dm²) | H₂ (%) | Dew point (°C) | Heating temperature (°C) | Holding time (s) | Al concentration (%) | Alloying temperature (°C) | | | | |
| 1 | A | 5.0 | -40 | 850 | 300 | 100 | 10.0 | -35 | 800 | 200 | 0.137 | 510 | ○ | ○ | GA | Example |
| 2 | A | 5.0 | -40 | 800 | 300 | 20 | 5.0 | -35 | 800 | 200 | 0.191 | - | ○ | ○ | GI | Example |
| 3 | A | 5.0 | -10 | 800 | 200 | 50 | 15.0 | -40 | 800 | 200 | 0.138 | 500 | Δ | O | GA | Example |
| 4 | A | 5.0 | 10 | 870 | 300 | 80 | 5.0 | -35 | 850 | 100 | 0.130 | 490 | × | Δ | GA | Comparative example |
| 5 | A | 5.0 | -40 | 850 | 300 | 380 | 10.0 | -35 | 800 | 200 | 0.132 | 510 | ○ | ○ | GA | Example |
| 6 | A | 5.0 | -40 | 850 | 200 | 350 | 15.0 | -35 | 820 | 150 | 0.195 | - | ○ | ○ | GI | Example |
| 7 | A | 5.0 | -40 | 850 | 300 | 2 | 10.0 | -35 | 800 | 200 | 0.138 | 470 | Δ | ○ | GA | Example |
| 8 | A | 5.0 | -35 | 850 | 300 | 4 | 15.0 | -35 | 820 | 150 | 0.187 | - | Δ | ○ | GI | Example |
| 9 | A | 5.0 | -40 | 830 | 300 | 0.5 | 10.0 | -35 | 800 | 200 | 0.137 | 520 | × | × | GA | Comparative example |
| 10 | A | 5.0 | -40 | 820 | 300 | 0.01 | 10.0 | -40 | 800 | 200 | 0.189 | - | × | × | GI | Comparative example |
| 11 | A | 5.0 | -40 | 870 | 300 | 25 | 10.0 | -35 | 800 | 200 | 0.126 | 480 | ○ | ○ | GA | Example |
| 12 | A | 5.0 | -40 | 760 | 300 | 10 | 10.0 | -35 | 800 | 200 | 0.136 | 480 | Δ | ○ | GA | Example |
| 13 | A | 3.0 | -35 | 850 | 30 | 25 | 5.0 | -35 | 790 | 50 | 0.189 | - | ○ | ○ | GI | Example |
| 14 | A | 5.0 | -40 | 650 | 300 | 100 | 10.0 | -35 | 800 | 200 | 0.138 | 470 | × | × | GA | Comparative example |
| 15 | A | 5.0 | -40 | 800 | 800 | 100 | 10.0 | -35 | 800 | 200 | 0.132 | 480 | Δ | × | GA | Comparative example |
| 16 | A | 5.0 | -40 | 830 | 5 | 100 | 10.0 | -35 | 800 | 200 | 0.190 | - | × | × | GI | Comparative example |
| 17 | A | 5.0 | -40 | 860 | 300 | 20 | 10.0 | -35 | 880 | 200 | 0.190 | - | ○ | Δ | GI | Example |
| 18 | A | 10.0 | -45 | 750 | 350 | 30 | 10.0 | -35 | 700 | 200 | 0.138 | 500 | ○ | ○ | GA | Example |
| 19 | A | 5.0 | -40 | 850 | 300 | 100 | 10.0 | -35 | 950 | 200 | 0.133 | 480 | × | × | GA | Comparative example |
| 20 | A | 5.0 | -40 | 830 | 300 | 100 | 10.0 | -35 | 550 | 200 | 0.193 | - | Δ | x | GI | Comparative example |
| 21 | B | 10.0 | -35 | 850 | 300 | 10 | 5.0 | -35 | 790 | 200 | 0.137 | 520 | ○ | ○ | GA | Example |
| 22 | B | 5.0 | -35 | 880 | 300 | 100 | 5.0 | -35 | 800 | 20 | 0.138 | 530 | O | A | GA | Example |
| 23 | B | 10.0 | -40 | 860 | 250 | 50 | 10.0 | -35 | 800 | 280 | 0.190 | - | ○ | ○ | GI | Example |
| 24 | B | 5.0 | -40 | 850 | 250 | 150 | 5.0 | -35 | 800 | 10 | 0.188 | - | × | × | GI | Comparative example |
| 25 | B | 5.0 | -40 | 830 | 400 | 100 | 5.0 | -35 | 800 | 850 | 0.189 | - | × | × | GI | Comparative example |
| **26** | C | 5.0 | -35 | 850 | 400 | 250 | 10.0 | -35 | 800 | 250 | 0.141 | 480 | ○ | ○ | GA | Example |
| 27 | C | 5.0 | -35 | 850 | 400 | 10 | 10.0 | -40 | 800 | 250 | 0.190 | - | ○ | ○ | GI | Example |
| 28 | D | 5.0 | -35 | 830 | 300 | 25 | 10.0 | -35 | 800 | 200 | 0.138 | 400 | ○ | ○ | GA | Example |
| 29 | D | 5.0 | -35 | 850 | 300 | 50 | 10.0 | -35 | 800 | 100 | 0.190 | - | ○ | ○ | GI | Example |
| 30 | D | 15.0 | -40 | 800 | 250 | 230 | 5.0 | -35 | 790 | 100 | 0.134 | 510 | ○ | ○ | GA | Example |
| 31 | E | 5.0 | -40 | 840 | 200 | 50 | 10.0 | -35 | 800 | 200 | 0.131 | 490 | ○ | Δ | GA | Example |
| 32 | E | 5.0 | -40 | 840 | 300 | 10 | 15.0 | -35 | 820 | 200 | 0.192 | - | ○ | Δ | GI | Example |
| 33 | F | 5.0 | -40 | 850 | 300 | 10 | 10.0 | -35 | 800 | 200 | 0.190 | - | × | × | GI | Comparative example |

### [Table 2-2]

**Table 2-2**

| (Example) | | | | | | | | | | | | | | | | |
|---|---|---|---|---|---|---|---|---|---|---|---|---|---|---|---|---|
| **No** | **Steel** | **First heating step** | | | | **Electrolytic treatment** | **Second heating step** | | | | **Coating treatment step** | **Alloying treatment step** | **Surface appearance** | **Adhesion** | **Product** | **Remarks** |
| | | **H₂ (%)** | **Dew point (°C)** | **Heating temperature (°C)** | **Holding time (s)** | **Charge density (C/dm²)** | **H₂ (%)** | **Dew point (°C)** | **Heating temperature (°C)** | **Holding time (s)** | **Al concentration (%)** | **Alloying temperature (°C)** | | | | |
| 34 | F | 10.0 | -40 | 850 | 250 | 50 | 10.0 | -35 | 820 | 200 | 0.138 | 520 | × | × | GA | Comparative example |
| 35 | G | 5.0 | -40 | 850 | 300 | 15 | 5.0 | -35 | 600 | 200 | 0.137 | 480 | ○ | ○ | GA | Example |
| 36 | G | 5.0 | -40 | 810 | 300 | 50 | 10.0 | -45 | 760 | 150 | 0.188 | - | ○ | ○ | GI | Example |
| 37 | G | 10.0 | -40 | 790 | 400 | 15 | 5.0 | -35 | 790 | 200 | 0.195 | - | ○ | ○ | GI | Example |
| 38 | G | 10.0 | -40 | 810 | 250 | 100 | 15.0 | -35 | 800 | 150 | 0.135 | 480 | ○ | ○ | GA | Example |
| 39 | H | 5.0 | -40 | 850 | 320 | 20 | 10.0 | -35 | 800 | 200 | 0.189 | - | ○ | ○ | GI | Example |
| 40 | H | 5.0 | -40 | 850 | 300 | 15 | 10.0 | -20 | 800 | 200 | 0.137 | 480 | ○ | ○ | GA | Example |
| 41 | H | 5.0 | -40 | 800 | 300 | 10 | 10.0 | -35 | 880 | 200 | 0.169 | - | ○ | ○ | GI | Example |
| 42 | H | 5.0 | -40 | 800 | 300 | 200 | 15.0 | -35 | 800 | 300 | 0.137 | 480 | ○ | ○ | GA | example |
| 43 | H | 10.0 | -50 | 600 | 100 | 100 | 5.0 | -35 | 810 | 250 | 0.190 | - | × | × | GI | Comparative example |
| 44 | I | 5.0 | -40 | 850 | 300 | 15 | 10.0 | -35 | 800 | 200 | 0.137 | 490 | ○ | Δ | GA | Example |
| 45 | I | 10.0 | -35 | 840 | 150 | 60 | 10.0 | -35 | 800 | 200 | 0.189 | - | ○ | Δ | GI | Example |
| 46 | J | 5.0 | -40 | 850 | 300 | 100 | 10.0 | -35 | 800 | 200 | 0.137 | 540 | × | Δ | GA | Comparative example |
| 47 | J | 5.0 | -35 | 820 | 300 | 120 | 10.0 | -35 | 800 | 200 | 0.130 | 520 | × | × | GA | Comparative example |
| 46 | J | 5.0 | -40 | 830 | 300 | 180 | 8.0 | -35 | 600 | 200 | 0.189 | - | × | × | GI | Comparative example |
| 49 | K | 5.0 | -40 | 840 | 300 | 10 | 10.0 | -35 | 800 | 200 | 0.136 | 540 | ○ | ○ | GA | Example |
| 50 | K | 10.0 | -35 | 850 | 200 | 50 | 10.0 | -40 | 830 | 100 | 0.192 | 510 | ○ | ○ | GI | Example |
| 51 | L | 5.0 | -35 | 850 | 300 | 20 | 5.0 | -40 | 800 | 100 | 0.189 | - | ○ | ○ | GI | Example |
| 52 | L | 1.0 | -40 | 830 | 300 | 10 | 10.0 | -35 | 800 | 200 | 0.129 | 490 | Δ | ○ | GA | Example |
| 53 | L | 10.0 | -35 | 850 | 250 | 50 | 1.0 | -35 | 800 | 200 | 0.137 | 520 | ○ | Δ | GA | Example |
| 54 | L | 5.0 | -35 | 870 | 550 | 10 | 10.0 | -40 | 800 | 250 | 0.130 | 500 | Δ | ○ | GA | Example |
| 55 | L | 5.0 | -35 | 870 | 680 | 10 | 5.0 | -40 | 800 | 250 | 0.190 | - | × | Δ | GI | Comparative example |
| 56 | L | 5.0 | -35 | 660 | 300 | 50 | 10.0 | -10 | 800 | 150 | 0.169 | - | Δ | ○ | GI | Example |
| 57 | L | 5.0 | -35 | 850 | 300 | 50 | 10.0 | 10 | 850 | 150 | 0.137 | 480 | × | Δ | GA | Comparative example |
| 58 | M | 5.0 | -40 | 850 | 300 | 200 | 10.0 | -45 | 800 | 200 | 0.138 | 490 | ○ | ○ | GA | Example |
| 59 | N | 5.0 | -40 | 840 | 350 | 150 | 5.0 | -35 | 780 | 200 | 0.193 | - | ○ | ○ | GI | Example |
| 60 | O | 5.0 | -35 | 630 | 300 | 12 | 10.0 | -35 | 800 | 200 | 0.138 | 510 | ○ | ○ | GA | Example |
| 61 | O | 10.0 | -35 | 800 | 250 | 50 | 15.0 | -30 | 780 | 150 | 0.190 | | ○ | ○ | GI | Example |
| 62 | P | 5.0 | -40 | 820 | 300 | 100 | 10.0 | -35 | 800 | 200 | 0.131 | 520 | ○ | ○ | GA | Example |
| 63 | Q | 5.0 | -40 | 820 | 300 | 100 | 10.0 | -35 | 800 | 200 | 0.138 | 540 | ○ | ○ | GA | Example |
| 64 | R | 5.0 | -40 | 820 | 300 | 100 | 10.0 | -35 | 800 | 200 | 0.137 | 510 | ○ | ○ | GA | Example |
| 65 | S | 5.0 | -35 | 850 | 250 | 50 | 10.0 | -35 | 600 | 250 | 0.190 | - | × | × | GI | Comparative example |
| 66 | T | 5.0 | -40 | 850 | 300 | 12 | 10.0 | -35 | 800 | 200 | 0.138 | 480 | × | × | GA | Comparative example |
| 67 | U | 5.0 | -40 | 850 | 300 | 12 | 10.0 | -35 | 800 | 200 | 0.137 | 490 | × | × | GA | Comparative example |

The high-strength hot-dip galvanized steel sheets and high-strength galvannealed steel sheets according to the examples had a good surface appearance and high adhesion. In contrast, comparative examples had poor surface appearance and poor adhesion of the coating.

### EXAMPLE 2

Hot-dip galvanized steel sheets and galvannealed steel sheets were produced from the steel having the composition listed in Table 1, the remainder being Fe and incidental impurities in the same manner as in Example 1, except that the conditions listed in Table 3 were employed. Evaluation was performed in the same way as in Example 1. Table 3 shows the evaluation results.

### [Table 3-1]

**Table 3-1**

| (Example) | | | | | | | | | | | | | | | | | |
|---|---|---|---|---|---|---|---|---|---|---|---|---|---|---|---|---|---|
| No | Steel | First heating step | | | | Electrolytic treatment | Pickling step after electrolytic treatment | Second heating step | | | | Coating treatment step | Alloying treatment step | Surface appearance | Adhesion | Product | Remarks |
| | | H₂ (%) | Dew point (°C) | Heating temperature (°C) | Holding time (s) | Charge density (C/dm²) | Weight loss (g/m²) | H₂ (%) | Dew point (°C) | Heating temperature (°C) | Holding time (s) | Al concentration (%) | Alloying temperature (°C) | | | | |
| 68 | A | 5.0 | -40 | 850 | 300 | 100 | 0.45 | 10.0 | -35 | 600 | 200 | 0.137 | 510 | ○ | ○ | GA | Example |
| 69 | A | 5.0 | -40 | 800 | 300 | 20 | 0.34 | 5.0 | -35 | 800 | 200 | 0.191 | - | ○ | ○ | GI | example |
| 70 | A | 5.0 | -10 | 800 | 200 | 50 | 0.42 | 15.0 | -40 | 800 | 200 | 0.138 | 500 | Δ | ○ | GA | Example |
| 71 | A | 5.0 | 10 | 870 | 300 | 80 | 0.66 | 5.0 | -35 | 850 | 100 | 0.130 | 490 | × | Δ | GA | Comparative example |
| 72 | A | 5.0 | -40 | 850 | 300 | 380 | 0.56 | 10.0 | -35 | 800 | 200 | 0.132 | 510 | ○ | ○ | GA | Example |
| 73 | A | 5.0 | -40 | 850 | 200 | 350 | 0.48 | 15.0 | -35 | 820 | 150 | 0.195 | - | ○ | ○ | GI | Example |
| 74 | A | 5.0 | -40 | 850 | 300 | 2 | 0.05 | 10.0 | -35 | 800 | 200 | 0.138 | 470 | Δ | ○ | GA | Example |
| 75 | A | 5.0 | -35 | 850 | 300 | 4 | 0.25 | 15.0 | -35 | 820 | 150 | 0.187 | - | Δ | ○ | GI | Example |
| 76 | A | 5.0 | -40 | 830 | 300 | 0.5 | 0.07 | 10.0 | -35 | 600 | 200 | 0.137 | 520 | × | × | GA | Comparative example |
| 77 | A | 5.0 | -40 | 820 | 300 | 0.01 | 0.38 | 10.0 | -40 | 800 | 200 | 0.189 | - | × | × | GI | Comparative example |
| 76 | A | 5.0 | -40 | 870 | 300 | 25 | 0.06 | 10.0 | -35 | 800 | 200 | 0.126 | 480 | ○ | ○ | GA | Example |
| 79 | A | 5.0 | -40 | 760 | 300 | 10 | 0.12 | 10.0 | -35 | 800 | 200 | 0.136 | 480 | Δ | ○ | GA | Example |
| 80 | A | 3.0 | -35 | 850 | 30 | 25 | 0.42 | 5.0 | -35 | 790 | 50 | 0.188 | - | ○ | ○ | GI | Example |
| 81 | A | 5.0 | -40 | 650 | 300 | 100 | 0.12 | 10.0 | -35 | 800 | 200 | 0.138 | 470 | × | × | GA | Comparative example |
| 82 | A | 5.0 | -40 | 800 | 800 | 100 | 0.21 | 10.0 | -35 | 800 | 200 | 0.132 | 480 | Δ | × | GA | Comparative example |
| 83 | A | 5.0 | -40 | 830 | 5 | 100 | 0.06 | 10.0 | -35 | 600 | 200 | 0.190 | - | × | × | GI | Comparative example |
| 84 | A | 5.0 | -40 | 660 | 300 | 20 | 0.28 | 10.0 | -35 | 660 | 200 | 0.190 | - | ○ | Δ | GI | Example |
| 85 | A | 10.0 | -45 | 750 | 350 | 30 | 0.08 | 10.0 | -35 | 700 | 200 | 0.138 | 500 | ○ | ○ | GA | Example |
| 86 | A | 5.0 | -40 | 850 | 300 | 100 | 0.28 | 10.0 | -35 | 950 | 200 | 0.133 | 480 | × | × | GA | Comparative example |
| 87 | A | 5.0 | -40 | 830 | 300 | 100 | 0.11 | 10.0 | -35 | 550 | 200 | 0.193 | - | Δ | × | GI | Comparative example |
| 88 | B | 10.0 | -35 | 650 | 300 | 10 | 0.23 | 5.0 | -35 | 700 | 200 | 0.137 | 520 | ○ | ○ | GA | Example |
| 89 | B | 5.0 | -35 | 860 | 300 | 100 | 0.15 | 5.0 | -35 | 800 | 20 | 0.138 | 530 | ○ | Δ | GA | Example |
| 90 | B | 10.0 | -40 | 860 | 250 | 50 | 0.33 | 10.0 | -35 | 800 | 280 | 0.190 | - | ○ | ○ | GI | Example |
| 91 | B | 5.0 | -40 | 850 | 250 | 150 | 0.46 | 5.0 | -35 | 600 | 10 | 0.188 | - | × | × | GI | Comparative example |
| 92 | B | 5.0 | -40 | 830 | 400 | 100 | 0.27 | 5.0 | -35 | 800 | 850 | 0.169 | - | × | × | GI | Comparative example |
| 93 | C | 5.0 | -35 | 850 | 400 | 250 | 0.05 | 10.0 | -35 | 800 | 250 | 0.141 | 480 | ○ | ○ | GA | Example |
| 94 | C | 5.0 | -35 | 850 | 400 | 10 | 0.16 | 10.0 | -40 | 800 | 250 | 0.190 | - | ○ | ○ | GI | Example |
| 95 | D | 5.0 | -35 | 830 | 300 | 25 | 0.43 | 10.0 | -35 | 800 | 200 | 0.138 | 490 | ○ | ○ | GA | Example |
| 96 | D | 5.0 | -35 | 850 | 300 | 50 | 0.08 | 10.0 | -35 | 800 | 100 | 0.190 | - | ○ | ○ | GI | Example |
| 97 | D | 15.0 | -40 | 800 | 250 | 230 | 0.04 | 5.0 | -35 | 790 | 100 | 0.134 | 510 | ○ | ○ | GA | Example |
| 98 | E | 5.0 | -40 | 840 | 200 | 50 | 1.25 | 10.0 | -35 | 800 | 200 | 0.131 | 490 | ○ | Δ | GA | Example |
| 99 | E | 5.0 | -40 | 840 | 300 | 10 | 0.85 | 15.0 | -35 | 620 | 200 | 0.192 | - | ○ | Δ | GI | Example |
| 100 | F | 5.0 | -40 | 850 | 300 | 10 | 0.12 | 10.0 | -35 | 800 | 200 | 0.190 | - | × | × | GI | Comparative example |
| 101 | F | 10.0 | -40 | 850 | 250 | 50 | 0.25 | 10.0 | -35 | 820 | 200 | 0.138 | 520 | × | × | GA | Comparative example |

### [Table 3-2]

**Table 3-2**

| (Example) | | | | | | | | | | | | | | | | | |
|---|---|---|---|---|---|---|---|---|---|---|---|---|---|---|---|---|---|
| No | Steel | First heating step | | | | Electrolytic treatment | Picking step after electrolytic treatment | Second heating step | | | | Coating treatment step | Alloying treatment step | Surface appearance | Adhesion | Product | Remarks |
| | | H₂ (%) | Dew point (°C) | Heating temperature (°C) | Holding time (s) | Charge density (C/dm²) | Weight loss (g/m²) | H₂ (%) | Dew point (°C) | Heating temperature (°C) | Holding time (s) | Al concentration (%) | Aloying temperature (°C) | | | | |
| 102 | G | 5.0 | -40 | 850 | 300 | 15 | 0.05 | 5.0 | -35 | 800 | 200 | 0.137 | 480 | ○ | ○ | GA | Example |
| 103 | G | 5.0 | -40 | 810 | 300 | 50 | 0.12 | 10.0 | -45 | 780 | 150 | 0.188 | - | ○ | ○ | Gl | Example |
| 104 | G | 10.0 | -40 | 790 | 400 | 15 | 0.38 | 5.0 | -35 | 780 | 200 | 0.195 | - | ○ | ○ | GI | Example |
| 105 | G | 10.0 | -40 | 810 | 250 | 100 | 0.87 | 15.0 | -35 | 600 | 150 | 0.135 | 480 | ○ | ○ | GA | Example |
| 106 | H | 5.0 | -40 | 850 | 320 | 20 | 0.42 | 10.0 | -35 | 800 | 200 | 0.189 | - | ○ | ○ | GI | Example |
| 107 | H | 5.0 | -40 | 850 | 300 | 15 | 0.07 | 10.0 | -20 | 800 | 200 | 0.137 | 480 | ○ | Δ | GA | Example |
| 108 | H | 5.0 | -40 | 800 | 300 | 10 | 4.6 | 10.0 | -35 | 850 | 200 | 0.169 | - | ○ | Δ | GI | Example |
| 109 | H | 5.0 | -40 | 800 | 300 | 200 | 1.83 | 15.0 | -35 | 800 | 300 | 0.137 | 480 | ○ | ○ | GA | Example |
| 110 | H | 10.0 | -50 | 800 | 100 | 100 | 0.29 | 5.0 | -35 | 810 | 250 | 0.190 | - | × | × | GI | Comparative example |
| 111 | I | 5.0 | -40 | 850 | 300 | 15 | 0.35 | 10.0 | -35 | 800 | 200 | 0.137 | 490 | ○ | ○ | GA | Example |
| 112 | I | 10.0 | -35 | 840 | 150 | 60 | 0.58 | 10.0 | -35 | 800 | 200 | 0.189 | - | ○ | ○ | GI | Example |
| 113 | J | 5.0 | -40 | 850 | 300 | 100 | 0.26 | 10.0 | -35 | 800 | 200 | 0.137 | 540 | Δ | ○ | GA | Example |
| 114 | J | 5.0 | -35 | 820 | 300 | 120 | 0.33 | 10.0 | -35 | 800 | 200 | 0.130 | 520 | Δ | Δ | GA | Example |
| 115 | J | 5.0 | -40 | 830 | 300 | 180 | 0.48 | 6.0 | -35 | 800 | 200 | 0.189 | - | Δ | Δ | GI | Example |
| 118 | K | 5.0 | -40 | 640 | 300 | 10 | 0.12 | 10.0 | -35 | 800 | 200 | 0.136 | 540 | ○ | ○ | GA | Example |
| 117 | K | 10.0 | -35 | 850 | 200 | 50 | 0.38 | 10.0 | -40 | 830 | 100 | 0.192 | 510 | ○ | ○ | GI | Example |
| 118 | L | 5.0 | -35 | 850 | 300 | 20 | 0.52 | 5.0 | -40 | 800 | 100 | 0.168 | - | ○ | ○ | GI | Example |
| 119 | L | 10 | -40 | 830 | 300 | 10 | 0.08 | 10.0 | -35 | 800 | 200 | 0.128 | 480 | Δ | ○ | GA | Example |
| 120 | L | 10.0 | -35 | 650 | 250 | 50 | 0.15 | 1.0 | -35 | 800 | 200 | 0.137 | 520 | ○ | Δ | GA | Example |
| 121 | L | 5.0 | -35 | 670 | 550 | 10 | 0.28 | 10.0 | -40 | 800 | 250 | 0.130 | 500 | Δ | ○ | GA | Example |
| 122 | L | 5.0 | -35 | 870 | 680 | 10 | 0.18 | 5.0 | -40 | 800 | 250 | 0.190 | - | K | Δ | GI | Comparative example |
| 123 | L | 5.0 | -35 | 860 | 300 | 50 | 0.34 | 10.0 | -10 | 800 | 150 | 0.189 | - | Δ | ○ | GI | Example |
| 124 | L | 5.0 | -35 | 650 | 300 | 50 | 0.18 | 10.0 | 10 | 850 | 150 | 0.137 | 480 | × | Δ | GA | Comparative example |
| 125 | M | 5.0 | -40 | 850 | 300 | 200 | 0.27 | 10.0 | -45 | 800 | 200 | 0.138 | 490 | ○ | ○ | GA | Example |
| 126 | N | 5.0 | -40 | 840 | 350 | 150 | 0.22 | 5.0 | -35 | 780 | 200 | 0.193 | - | ○ | ○ | GI | Example |
| 127 | O | 5.0 | -35 | 830 | 300 | 12 | 0.35 | 10.0 | -35 | 800 | 200 | 0.138 | 510 | ○ | ○ | GA | Example |
| 128 | O | 10.0 | -35 | 600 | 250 | 50 | 0.18 | 15.0 | -30 | 780 | 150 | 0.190 | - | ○ | ○ | GI | Example |
| 129 | P | 5.0 | -40 | 820 | 300 | 100 | 0.45 | 10.0 | -35 | 800 | 200 | 0.131 | 520 | ○ | ○ | GA | Example |
| 130 | Q | 5.0 | -40 | 820 | 300 | 100 | 0.45 | 10.0 | -35 | 800 | 200 | 0.138 | 540 | ○ | ○ | GA | Example |
| 131 | R | 5.0 | -40 | 820 | 300 | 100 | 0.45 | 10.0 | -35 | 800 | 200 | 0.137 | 510 | ○ | ○ | GA | Example |
| 132 | S | 5.0 | -35 | 850 | 250 | 50 | 0.15 | 10.0 | -35 | 800 | 250 | 0.190 | - | × | × | GI | Comparative example |
| 133 | T | 5.0 | -40 | 850 | 300 | 12 | 0.04 | 10.0 | -35 | 800 | 200 | 0.138 | 480 | × | × | GA | Comparative example |
| 134 | U | 5.0 | -40 | 850 | 300 | 12 | 0.04 | 10.0 | -35 | 800 | 200 | 0.137 | 490 | × | × | GA | Comparative example |

The hot-dip galvanized steel sheets and galvannealed steel sheets according to the examples had a good surface appearance and high adhesion. In contrast, comparative examples had poor surface appearance and poor adhesion of the coating.

### EXAMPLE 3

Hot-dip galvanized steel sheets and galvannealed steel sheets were produced from the steel having the composition listed in Table 1, the remainder being Fe and incidental impurities in the same manner as in Example 1, except that the conditions listed in Table 4 (Tables 4-1 and 4-2 are collectively referred to as Table 4) were employed. Evaluation was performed in the same way as in Example 1. Table 4 shows the evaluation results.

### [Table 4-1]

**Table 4-1**

| (Example) | | | | | | | | | | | | | | | | | |
|---|---|---|---|---|---|---|---|---|---|---|---|---|---|---|---|---|---|
| No | Steel | First heating step | | | | Pickling step before electrolytic treatment | Electrolytic treatment | Second heating step | | | | Coating treatment step | Alloying treatment step | Surface appearance | Adhesion | Product | Remarks |
| | | H₂ (%) | Dew point (°C) | Heating temperature (°C) | Holding time (s) | Weight loss (g/m²) | Charge density (C/dm²) | H₂ (%) | Dew point (°C) | Heating temperature (°C) | Holding time (s) | Al concentration (%) | Alloying temperature (°C) | | | | |
| 135 | A | 5.0 | -40 | 850 | 300 | 0.45 | 100 | 10.0 | -35 | 800 | 200 | 0.137 | 510 | ○ | ○ | GA | Example |
| 136 | A | 5.0 | -40 | 800 | 300 | 0.34 | 20 | 5.0 | -35 | 800 | 200 | 0.191 | - | ○ | ○ | GI | Example |
| 137 | A | 5.0 | -10 | 800 | 200 | 0.42 | 50 | 15.0 | -40 | 800 | 200 | 0.138 | 500 | Δ | ○ | GA | Example |
| 13B | A | 5.0 | 10 | 870 | 300 | 0.86 | 80 | 5.0 | -35 | 850 | 100 | 0.130 | 490 | × | Δ | GA | Comparative example |
| 139 | A | 5.0 | -40 | 850 | 300 | 0.56 | 380 | 10.0 | -35 | 800 | 200 | 0.132 | 510 | ○ | ○ | GA | Example |
| 140 | A | 5.0 | -40 | 850 | 200 | 0.46 | 350 | 15.0 | -35 | 820 | 150 | 0.195 | - | ○ | ○ | GI | Example |
| 141 | A | 5.0 | -40 | 850 | 300 | 0.05 | 2 | 10.0 | -35 | 800 | 200 | 0.138 | 470 | Δ | ○ | GA | Example |
| 142 | A | 5.0 | -35 | 650 | 300 | 0.25 | 4 | 15.0 | -35 | 820 | 150 | 0.187 | - | Δ | ○ | GI | Example |
| 143 | A | 5.0 | -40 | 830 | 300 | 0.07 | 0.5 | 10.0 | -35 | 800 | 200 | 0.137 | 520 | × | × | GA | Comparative example |
| 144 | A | 5.0 | -40 | 820 | 300 | 0.38 | 0.01 | 10.0 | -40 | 800 | 200 | 0.189 | - | × | × | GI | Comparative example |
| 145 | A | 5.0 | -40 | 870 | 300 | 0.06 | 25 | 10.0 | -35 | 800 | 200 | 0.126 | 480 | ○ | ○ | GA | Example |
| 146 | A | 5.0 | -40 | 760 | 300 | 0.12 | 10 | 10.0 | -35 | 800 | 200 | 0.136 | 480 | Δ | ○ | GA | Example |
| 147 | A | 3.0 | -35 | 850 | 30 | 0.42 | 25 | 5.0 | -35 | 780 | 50 | 0.189 | - | ○ | ○ | GI | Example |
| 148 | A | 5.0 | -40 | 650 | 300 | 0.12 | 100 | 10.0 | -35 | 800 | 200 | 0.138 | 470 | × | × | GA | Comparative example |
| 149 | A | 5.0 | -40 | 800 | 800 | 0.21 | 100 | 10.0 | -35 | 800 | 200 | 0.132 | 480 | Δ | × | GA | Comparative example |
| 150 | A | 5.0 | -40 | 830 | 5 | 0.06 | 100 | 10.0 | -35 | 800 | 200 | 0.190 | - | × | × | GI | Comparative example |
| 151 | A | 5.0 | -40 | 860 | 300 | 0.28 | 20 | 10.0 | -35 | 880 | 200 | 0.190 | - | ○ | Δ | GI | Example |
| 152 | A | 10.0 | -45 | 750 | 350 | 0.08 | 30 | 10.0 | -35 | 700 | 200 | 0.138 | 500 | ○ | ○ | GA | Example |
| 153 | A | 5.0 | -40 | 850 | 300 | 0.28 | 100 | 10.0 | -35 | 950 | 200 | 0.133 | 480 | × | × | GA | Comparative example |
| 154 | A | 5.0 | -40 | 830 | 300 | 0.11 | 100 | 10.0 | -35 | 550 | 200 | 0.193 | - | Δ | × | GI | Comparative example |
| 155 | B | 10.0 | -35 | 850 | 300 | 0.23 | 10 | 5.0 | -35 | 790 | 200 | 0.137 | 520 | ○ | ○ | GA | Example |
| 156 | B | 5.0 | -35 | 860 | 300 | 0.15 | 100 | 5.0 | -35 | 800 | 20 | 0.138 | 530 | ○ | Δ | GA | Example |
| 157 | B | 10.0 | -40 | 860 | 250 | 0.33 | 50 | 10.0 | -35 | 800 | 280 | 0.190 | - | ○ | ○ | GI | Example |
| 158 | B | 5.0 | -40 | 850 | 250 | 0.46 | 150 | 5.0 | -35 | 800 | 10 | 0.188 | - | × | × | GI | Comparative example |
| 159 | B | 5.0 | -40 | 830 | 400 | 0.27 | 100 | 5.0 | -35 | 800 | 850 | 0.189 | - | × | × | GI | Comparative example |
| 180 | C | 5.0 | -35 | 850 | 400 | 0.05 | 250 | 10.0 | -35 | 800 | 250 | 0.141 | 480 | ○ | ○ | GA | Example |
| 181 | C | 5.0 | -35 | 850 | 400 | 0.16 | 10 | 10.0 | -40 | 800 | 250 | 0.190 | - | ○ | ○ | GI | Example |
| 162 | D | 5.0 | -35 | 830 | 300 | 0.43 | 25 | 10.0 | -35 | 800 | 200 | 0.138 | 490 | ○ | ○ | GA | Example |
| 163 | D | 5.0 | -35 | 850 | 300 | 0.08 | 50 | 10.0 | -35 | 800 | 100 | 0.190 | - | ○ | ○ | GI | Example |
| 164 | D | 15.0 | -40 | 800 | 250 | 0.04 | 230 | 5.0 | -35 | 790 | 100 | 0.134 | 510 | ○ | ○ | GA | Example |
| 165 | E | 5.0 | -40 | 840 | 200 | 1.25 | 50 | 10.0 | -35 | 800 | 200 | 0.131 | 490 | ○ | ○ | GA | Example |
| 166 | E | 5.0 | -40 | 840 | 300 | 0.65 | 10 | 15.0 | -35 | 820 | 200 | 0.192 | - | ○ | ○ | GI | Example |
| 167 | F | 5.0 | -40 | 650 | 300 | 0.12 | 10 | 10.0 | -35 | 800 | 200 | 0.190 | - | ○ | Δ | GI | Example |
| 168 | F | 10.0 | -40 | 850 | 250 | 0.25 | 50 | 10.0 | -35 | 820 | 200 | 0.138 | 520 | ○ | Δ | GA | Example |

### [Table 4-2]

**Table 4-2**

| (Example) | | | | | | | | | | | | | | | | | |
|---|---|---|---|---|---|---|---|---|---|---|---|---|---|---|---|---|---|
| No | Steel | First heating step | | | | Pickling step electrolytic treatment | Electrolytic treatment | Second heating step | | | | Coating treatment step | Alloying treatment step | Surface appearance | Adhesion | Product | Remarks |
| | | H₂ (%) | Dew point (°C) | Heating temperature (°C) | Holding time (s) | Weight loss (g/m²) | Charge density (C/dm²) | H₂ (%) | Dew point (°C) | Heating temperature (°C) | Holding time (s) | Al concentration (%) | Alloying temperature (°C) | | | | |
| 169 | G | 5.0 | -40 | 850 | 300 | 0.05 | 15 | 5.0 | -35 | 800 | 200 | 0.137 | 480 | ○ | ○ | GA | Example |
| 170 | G | 5.0 | -40 | 810 | 300 | 0.12 | 50 | 10.0 | -35 | 780 | 150 | 0.188 | - | ○ | ○ | GI | Example |
| 171 | G | 10.0 | -40 | 790 | 400 | 0.38 | 15 | 5.0 | -35 | 790 | 200 | 0.195 | - | ○ | ○ | GI | Example |
| 172 | G | 10.0 | -40 | 810 | 250 | 0.87 | 100 | 15.0 | -35 | 800 | 150 | 0.135 | 480 | ○ | ○ | GA | Example |
| 173 | H | 5.0 | -40 | 850 | 320 | 0.42 | 20 | 10.0 | -35 | 800 | 200 | 0.189 | - | ○ | ○ | GI | Example |
| 174 | H | 5.0 | -40 | 650 | 300 | 0.07 | 15 | 10.0 | -20 | 800 | 200 | 0.137 | 480 | ○ | Δ | GA | Example |
| 175 | H | 5.0 | -40 | 800 | 300 | 4.8 | 10 | 10.0 | -35 | 860 | 200 | 0.189 | - | ○ | Δ | GI | Example |
| 176 | H | 5.0 | -40 | 800 | 300 | 1.83 | 200 | 15.0 | -35 | 800 | 300 | 0.137 | 480 | ○ | ○ | GA | Example |
| 177 | H | 10.0 | -50 | 800 | 100 | 0.29 | 100 | 5.0 | -35 | 810 | 250 | 0.190 | - | × | × | GI | Comparative example |
| 176 | I | 5.0 | -40 | 850 | 300 | 0.35 | 15 | 10.0 | -35 | 800 | 200 | 0.137 | 490 | ○ | ○ | GA | Example |
| 179 | I | 10.0 | -35 | 840 | 150 | 0.58 | 60 | 10.0 | -35 | 800 | 200 | 0.189 | - | ○ | ○ | GI | Example |
| 180 | J | 5.0 | -40 | 850 | 300 | 0.26 | 100 | 10.0 | -35 | 800 | 200 | 0.137 | 540 | ○ | ○ | GA | Example |
| 181 | J | 5.0 | -35 | 820 | 300 | 0.33 | 120 | 10.0 | -35 | 800 | 200 | 0.130 | 520 | ○ | ○ | GA | Example |
| 182 183 | J | 5.0 | -40 | 830 | 300 | 0.48 | 180 | 6.0 | -35 | 800 | 200 | 0.169 | - | ○ | ○ | GI | Example |
| | K | 5.0 | -40 | 840 | 300 | 0.12 | 10 | 10.0 | -35 | 800 | 200 | 0.136 | 540 | ○ | ○ | GA | Example |
| 164 | K | 10.0 | -35 | 850 | 200 | 0.38 | 50 | 10.0 | -40 | 830 | 100 | 0.192 | 510 | ○ | ○ | GI | Example |
| 185 | L | 5.0 | -35 | 850 | 300 | 0.52 | 20 | 5.0 | -40 | 800 | 100 | 0.189 | - | ○ | ○ | GI | Example |
| 186 | L | 1.0 | -40 | 830 | 300 | 0.08 | 10 | 10.0 | -35 | 800 | 200 | 0,129 | 490 | Δ | ○ | GA | Example |
| 187 | L | 10.0 | -35 | 850 | 250 | 0.15 | 50 | 1.0 | -35 | 800 | 200 | 0.137 | 520 | ○ | Δ | GA | Example |
| 188 | L | 5.0 | -35 | 870 | 550 | 0.28 | 10 | 10.0 | -40 | 800 | 250 | 0.130 | 500 | Δ | ○ | GA | Example |
| 189 | L | 5.0 | -35 | 870 | 680 | 0.18 | 10 | 5.0 | -40 | 800 | 250 | 0.190 | - | × | Δ | GI | Comparative example |
| 190 | L | 5.0 | -35 | 860 | 300 | 0.34 | 50 | 10.0 | -10 | 800 | 150 | 0.189 | - | Δ | ○ | GI | Example |
| 191 | L | 5.0 | -35 | 650 | 300 | 0.18 | 50 | 10.0 | 10 | 850 | 150 | 0.137 | 480 | × | Δ | GA | Comparative example |
| 192 | M | 5.0 | -40 | 850 | 300 | 0.27 | 200 | 10.0 | -45 | 800 | 200 | 0.138 | 490 | ○ | ○ | GA | Example |
| 193 | N | 5.0 | -40 | 840 | 350 | 0.22 | 150 | 5.0 | -35 | 780 | 200 | 0.193 | - | ○ | ○ | GI | Example |
| 194 | ○ | 5.0 | -35 | 830 | 300 | 0.35 | 12 | 10.0 | -35 | 800 | 200 | 0.138 | 510 | ○ | ○ | GA | Example |
| 195 | ○ | 10.0 | -35 | 800 | 250 | 0.18 | 50 | 15.0 | -30 | 780 | 150 | 0.190 | - | ○ | ○ | GI | Example |
| 196 | P | 5.0 | -40 | 820 | 300 | 0.45 | 100 | 10.0 | -35 | 800 | 200 | 0.131 | 520 | ○ | ○ | GA | Example |
| 197 | Q | 5.0 | -40 | 820 | 300 | 0.45 | 100 | 10.0 | -35 | 800 | 200 | 0.138 | 540 | ○ | ○ | GA | Example |
| 198 | R | 5.0 | -40 | 820 | 300 | 0.45 | 100 | 10.0 | -35 | 600 | 200 | 0.137 | 510 | ○ | ○ | GA | Example |
| 199 | S | 5.0 | -35 | 850 | 250 | 0.15 | 50 | 10.0 | -35 | 600 | 250 | 0.190 | - | × | × | GI | Comparative example |
| 200 | T | 5.0 | -40 | 850 | 300 | 0.04 | 12 | 10.0 | -35 | 800 | 200 | 0.138 | 480 | × | × | GA | Comparative example |
| 201 | U | 5.0 | -40 | 850 | 300 | 0.04 | 12 | 10.0 | -35 | 800 | 200 | 0.137 | 490 | × | × | GA | Comparative example |

The hot-dip galvanized steel sheets and galvannealed steel sheets according to the examples had a good surface appearance and high adhesion. In contrast, comparative examples had poor surface appearance and poor adhesion of the coating.

### EXAMPLE 4

Hot-dip galvanized steel sheets and galvannealed steel sheets were produced from the steel having the composition listed in Table 1, the remainder being Fe and incidental impurities in the same manner as in Example 1, except that the conditions listed in Tables 5 to 7 were employed. Evaluation was performed in the same way as in Example 1 except for adhesion of the coating of unalloyed hot-dip galvanized steel sheets.

Unalloyed hot-dip galvanized steel sheets were subjected to a ball impact test. Adhesion of the coating was evaluated by peeling off a processed portion with a cellophane adhesive tape and by visually inspecting the processed portion for peeling of the coated layer. In the ball impact test, the mass of the ball was 1.8 kg, and the drop height was 100 cm. The diameters of the impact portions were 3/4 and 3/8 inches.
Double circle: Neither peeling of the coated layer for 3/4 or 3/8 inches
Circle: No peeling of the coated layer for 3/4 inches, but slight peeling of the coated layer for 3/8 inches
Cross: Peeling of the coated layer

Tables 5 to 7 show the evaluation results.

### [Table 5]

**Table 5**

| (Example) | | | | | | | | | | | | | | | | | |
|---|---|---|---|---|---|---|---|---|---|---|---|---|---|---|---|---|---|
| No | Steel | First heating step | | | | Electrolytic treatment | | Second heating step | | | | Coating treatment step | Alloying treatment step | Surface appearance | Adhesion | Product | Remarks |
| | | H₂ (%) | Dew point (°C) | Heating temperature (°C) | Holding time (s) | Charge density (C/dm²) | Treatment time (s) | H₂ (%) | Dew point (°C) | Heating temperature (°C) | Holding time (s) | Al concentration (%) | Alloying temperature (°C) | | | | |
| 202 | A | 5.0 | -40 | 800 | 300 | 20 | 1 | 5.0 | -35 | 800 | 200 | 0.191 | - | ○ | ○ | GI | Example |
| 203 | A | 5.0 | -40 | 800 | 300 | 20 | 3 | 5.0 | -35 | 800 | 200 | 0.191 | - | ○ | ⊙ | GI | Example |
| 204 | A | 5.0 | -40 | 800 | 300 | 20 | 40 | 5.0 | -35 | 800 | 200 | 0.191 | - | ○ | ⊙ | GI | Example |
| 205 | B | 10.0 | -40 | 860 | 250 | 50 | 1 | 10.0 | -35 | 600 | 280 | 0.190 | - | ○ | ○ | GI | Example |
| 206 | B | 10.0 | -40 | 860 | 250 | 50 | 5 | 10.0 | -35 | 800 | 280 | 0.190 | - | ○ | ⊙ | GI | Example |
| 207 | B | 10.0 | -40 | 860 | 250 | 50 | 30 | 10.0 | -35 | 600 | 280 | 0.190 | - | ○ | ⊙ | GI | Example |
| 208 | F | 5.0 | -40 | 850 | 300 | 10 | 1 | 10.0 | -35 | 600 | 200 | 0.190 | - | × | × | GI | Comparative example |
| 209 | F | 5.0 | -40 | 850 | 300 | 10 | 5 | 10.0 | -35 | 800 | 200 | 0.190 | - | × | × | GI | Comparative example |
| 210 | F | 5.0 | -40 | 850 | 300 | 10 | 35 | 10.0 | -35 | 800 | 200 | 0.190 | - | × | × | GI | Comparative example |
| 211 | H | 5.0 | -40 | 800 | 300 | 10 | 1 | 10.0 | -35 | 860 | 200 | 0.189 | - | ○ | ○ | GI | Example |
| 212 | H | 5.0 | -40 | 600 | 300 | 10 | 10 | 10.0 | -35 | 860 | 200 | 0.189 | - | ○ | ⊙ | GI | Example |
| 213 | H | 5.0 | -40 | 800 | 300 | 10 | 20 | 10.0 | -35 | 860 | 200 | 0.189 | - | ○ | ⊙ | GI | Example |

### [Table 6]

| Table 6 | | | | | | | | | | | | | | | | | | |
|---|---|---|---|---|---|---|---|---|---|---|---|---|---|---|---|---|---|---|
| (Example) | | | | | | | | | | | | | | | | | | |
| No | steel | First heating step | | | | Electrolytic treatment | | Pickiing step after electrolytic treatment | Second heating step | | | | Coating treatment step | Alloying treatment step | Surface appearance | Adhesion | Product | Remarks |
| | | H₂ (%) | Dew point (°C) | Heating temperature (°C) | Holding time (s) | Charge density (C/dm²) | Treatment time (s) | Weight loss (g/m²) | H₂ (%) | Dew point (°C) | Heating temperature (°C) | Holding time (s) | Al concentration (%) | Alloying temperature (°C) | | | | |
| 214 | A | 5.0 | -40 | 800 | 300 | 20 | 1 | 0.34 | 5.0 | -35 | 800 | 200 | 0.191 | - | ○ | ○ | GI | Example |
| 215 | A | 5.0 | -40 | 600 | 300 | 20 | 3 | 0.29 | 5.0 | -35 | 600 | 200 | 0.191 | - | ○ | ⊙ | GI | Example |
| 216 | A | 5.0 | -40 | 800 | 300 | 20 | 40 | 0.36 | 5.0 | -35 | 800 | 200 | 0.191 | - | ○ | ⊙ | GI | Example |
| 217 | B | 10.0 | -40 | 860 | 250 | 50 | 1 | 0.33 | 10.0 | -35 | 800 | 280 | 0.190 | - | ○ | ○ | GI | Example |
| 218 | B | 10.0 | -40 | 660 | 250 | 50 | 5 | 0.33 | 10.0 | -35 | 800 | 280 | 0.190 | - | ○ | ⊙ | GI | Example |
| 219 | B | 10.0 | -40 | 880 | 250 | 50 | 30 | 0.33 | 10.0 | -35 | 800 | 280 | 0.190 | - | ○ | ⊙ | GI | Example |
| 220 | F | 5.0 | -40 | 850 | 300 | 10 | 1 | 0.12 | 10.0 | -35 | 800 | 200 | 0.190 | - | × | × | GI | Comparative example. |
| 221 | F | 5.0 | -40 | 850 | 300 | 10 | 5 | 0.12 | 10.0 | -35 | 600 | 200 | 0.190 | - | × | × | GI | Comparative example |
| 222 | F | 5.0 | -40 | 850 | 300 | 10 | 35 | 0.12 | 10.0 | -35 | 800 | 200 | 0.190 | - | × | × | GI | Comparative example |
| 223 | H | 5.0 | -40 | 800 | 300 | 10 | 1 | 4.8 | 10.0 | -35 | 880 | 200 | 0.189 | - | ○ | ○ | GI | Example |
| 224 | H | 5.0 | -40 | 800 | 300 | 10 | 10 | 4.8 | 10.0 | -35 | 660 | 200 | 0.189 | - | ○ | ⊙ | GI | Example |
| 225 | H | 5.0 | -40 | 800 | 300 | 10 | 20 | 4.8 | 10.0 | -35 | 660 | 200 | 0.189 | - | ○ | ⊙ | GI | Example |

### [Table 7]

**Table 7**

| Example) | | | | | | | | | | | | | | | | | | |
|---|---|---|---|---|---|---|---|---|---|---|---|---|---|---|---|---|---|---|
| No | Steel | First heating step | | | | Pickling step before electrolytic treatment | Electrolytic treatment | | Second heating step | | | | Coating treatment step | Alloying treatment step | Surface appearance | Adhesion | Product | Remarks |
| | | H₂ (%) | Dew point (°C) | Heating temperature (°C) | Holding time (s) | Weight loss (g/m²) | Charge density (C/dm²) | Treatment time (s) | H₂ (%) | Dew point (°C) | Heating temperature (°C) | Holding time (s) | Al concentration (%) | Alloying temperature (°C) | | | | |
| 226 | A | 5.0 | -40 | 800 | 300 | 0.34 | 20 | 1 | 5.0 | -35 | 800 | 200 | 0.191 | - | ○ | ○ | GI | Example |
| 227 | A | 5.0 | -40 | 800 | 300 | 0.29 | 20 | 3 | 5.0 | -35 | 800 | 200 | 0.191 | - | ○ | ⊙ | GI | Example |
| 228 | A | 5.0 | -40 | 800 | 300 | 0.38 | 20 | 40 | 5.0 | -35 | 800 | 200 | 0.191 | - | ○ | ⊙ | GI | Example |
| 229 | B | 10.0 | -40 | 860 | 250 | 0.33 | 50 | 1 | 10.0 | -35 | 800 | 280 | 0.190 | - | ○ | ○ | GI | Example |
| 230 | B | 10.0 | -40 | 660 | 250 | 0.33 | 50 | 5 | 10.0 | -35 | 800 | 280 | 0.190 | - | ○ | ⊙ | GI | Example |
| 231 | B | 10.0 | -40 | 860 | 250 | 0.33 | 50 | 30 | 10.0 | -35 | 800 | 280 | 0.190 | - | ○ | ⊙ | GI | Example |
| 232 | F | 5.0 | -40 | 850 | 300 | 0.12 | 10 | 1 | 10.0 | -35 | 800 | 200 | 0.190 | - | ○ | Δ | GI | Example |
| 233 | F | 5.0 | -40 | 850 | 300 | 0.12 | 10 | 5 | 10.0 | -35 | 800 | 200 | 0.190 | - | ○ | ○ | GI | Example |
| 234 | F | 5.0 | -40 | 850 | 300 | 0.12 | 10 | 35 | 10.0 | -35 | 800 | 200 | 0.190 | - | ○ | ○ | GI | Example |
| 235 | H | 5.0 | -40 | 800 | 300 | 4.8 | 10 | 1 | 10.0 | -35 | 860 | 200 | 0.189 | - | ○ | ○ | GI | Example |
| 236 | H | 5.0 | -40 | 800 | 300 | 4.8 | 10 | 10 | 10.0 | -35 | 860 | 200 | 0.189 | - | ○ | ⊙ | GI | Example |
| 237 | H | 5.0 | -40 | 800 | 300 | 4.8 | 10 | 20 | 10.0 | -35 | 860 | 200 | 0.169 | - | ○ | ⊙ | GI | Example |

The hot-dip galvanized steel sheets and galvannealed steel sheets according to the examples had a good surface appearance and high adhesion. In contrast, comparative examples had poor surface appearance and poor adhesion of the coating.

### Industrial Applicability

The present invention provides a high-strength hot-dip galvanized steel sheet and a high-strength galvannealed steel sheet each having high strength, a good surface appearance, and good adhesion of the coating. For example, application of a high-strength hot-dip galvanized steel sheet or high-strength galvannealed steel sheet according to the present invention to automobile structural members can improve mileage due to weight reduction of automotive bodies.

## Claims

1. A method for producing a high-strength hot-dip galvanized steel sheet, comprising:
a first heating step of holding a steel sheet at a temperature in the range of 700°C to 900°C or in a temperature range of 700°C to 900°C for 20 to 600 seconds in an atmosphere having a H₂ concentration in the range of 0.05% to 25.0% by volume and a dew point in the range of -45°C to 0°C, the steel sheet having a composition consisting of C: 0.040% to 0.50%, Si: 1.00% or less, Cr: 0.10% to 3.00%, Mn: 0.80% to 8.00%, P: 0.100% or less, S: 0.0100% or less, Al: 0.100% or less, and optionally one or more of Mo: 0.01% to 0.50%, Nb: 0.010% to 0.100%, B: 0.0001% to 0.0050%, Ti: 0.010% to 0.100%, Cu: 1.00% or less, V: 0.500% or less, Ni: 0.50 or less, N: 0.0100% or less, Sb: 0.10% or less, Sn: 0.10% or less, Ca: 0.0100% or less, and REM: 0.010% or less, on a mass percent basis, the remainder being Fe and incidental impurities;
an electrolytic treatment step of subjecting the steel sheet after the first heating step to electrolytic treatment in an alkaline aqueous solution at a charge density in the range of 1.0 to 400 C/dm², the steel sheet acting as an anode;
a second heating step of holding the steel sheet after the electrolytic treatment step at a temperature in the range of 650°C to 900°C or in a temperature range of 650°C to 900°C for 15 to 300 seconds in an atmosphere having a H₂ concentration in the range of 0.05% to 25.0% by volume and a dew point of 0°C or less; and
a coating treatment step of subjecting the steel sheet after the second heating step to hot-dip galvanizing treatment; and
optionally a pickling step of pickling the steel sheet either after the electrolytic treatment and before the second heating step or after the first heating step and before the electrolytic treatment step such that a pickling weight loss ranges from 0.05 to 5 g/m² on an Fe basis; wherein
the amount of Mn is 0.80% to 5.00%, if no pickling step is performed, and the amount of Cr is 0.10% to 2.00%, if no pickling step is performed after the first heating step and before the electrolytic treatment step.

2. The method for producing a high-strength hot-dip galvanized steel sheet according to Claim 1, wherein the electrolytic treatment in the alkaline aqueous solution in the electrolytic treatment step is performed for 2 seconds or more.

3. A method for producing a high-strength galvannealed steel sheet, comprising subjecting a high-strength hot-dip galvanized steel sheet to alloying treatment, wherein the high-strength hot-dip galvanized steel sheet is produced by the method according to any one of Claims 1 to 2.

## Patentansprüche

1. Verfahren zum Herstellen eines hochfesten feuerverzinkten Stahlblechs, das umfasst:
einen ersten Erhitzungs-Schritt, in dem ein Stahlblech über 20 bis 600 Sekunden auf einer Temperatur im Bereich von 700 °C bis 900 °C oder in einem Temperaturbereich von 700 °C bis 900 °C in einer Atmosphäre gehalten wird, die eine H₂-Konzentration im Bereich von 0,05 Vol.-% bis 25,0 Vol.-% und einen Taupunkt im Bereich von -45 °C bis 0 °C hat, wobei das Stahlblech eine Zusammensetzung hat, die auf Masseprozent-Basis aus 0,040% bis 0,50% C, 1,00% oder weniger Si, 0,10% bis 3,00% Cr, 0,80% bis 8,00% Mn, 0,100% oder weniger P, 0,0100% oder weniger S, 0,100 % oder weniger Al und optional aus 0,01% bis 0,50% Mo, 0,010% bis 0,100% Nb, 0,0001% bis 0,0050% B, 0,010% bis 0,100% Ti, 1,00% oder weniger Cu, 0,500% oder weniger V, 0,50 oder weniger Ni, 0,0100% oder weniger N, 0,10% oder weniger Sb, 0,10% oder weniger Sn, 0,0100% oder weniger Ca sowie 0,101% oder weniger REM besteht, wobei der Rest Fe und zufällige Verunreinigungen sind;
einen Schritt zur elektrolytischen Behandlung, in dem das Stahlblech nach dem ersten Erhitzungs-Schritt elektrolytischer Behandlung in einer wässrigen alkalischen Lösung mit einer Ladungsdichte im Bereich von 1,0 bis 400 C/dm² unterzogen wird, wobei das Stahlblech als eine Anode wirkt;
einen zweiten Erhitzungs-Schritt, in dem das Stahlblech über 15 bis 300 Sekunden auf einer Temperatur im Bereich von 650 °C bis 900 °C oder in einem Temperaturbereich von 650 °C bis 900 °C in einer Atmosphäre gehalten wird, die eine H₂-Konzentration im Bereich von 0,05 bis 25,0 Vol.-% und einen Taupunkt von 0 °C oder darunter hat;
einen Schritt zur Beschichtungs-Behandlung, in dem das Stahlblech nach dem zweiten Erhitzungs-Schritt Feuerverzinkungs-Behandlung unterzogen wird; sowie
optional einen Beiz-Schritt, in dem das Stahlblech entweder nach der elektrolytischen Behandlung und vor dem zweiten Erhitzungs-Schritt oder nach dem ersten Erhitzungs-Schritt und vor dem Schritt zur elektrolytischen Behandlung so gebeizt wird, dass ein Gewichtsverlust beim Beizen von 0,05 bis 5 g/m² auf Fe-Basis reicht; wobei
die Menge an Mn 0,80 % bis 5,00 % beträgt, wenn kein Beiz-Schritt durchgeführt wird, und die Menge an Cr 0,10 % bis 2,00 % beträgt, wenn kein Beiz- Schritt nach dem ersten Erhitzungs-Schritt und vor dem Schritt zur elektrolytischen Behandlung durchgeführt wird.

2. Verfahren zum Herstellen eines hochfesten feuerverzinkten Stahlblechs nach Anspruch 1, wobei die elektrolytische Behandlung in der wässrigen alkalischen Lösung in dem Schritt zur elektrolytischen Behandlung für 2 Sekunden oder länger durchgeführt wird.

3. Verfahren zum Herstellen eines hochfesten feuerverzinkten und wärmebehandelten (galvannealed) Stahlblechs, das umfasst, dass ein hochfestes feuerverzinktes Stahlblech Legierungs-Behandlung unterzogen wird, wobei das hochfeste feuerverzinkte Stahlblech mit dem Verfahren nach einem der Ansprüche 1 bis 2 hergestellt wird.

## Revendications

1. Procédé de production d'une tôle d'acier de haute résistance galvanisée par immersion à chaud, comprenant :
une première étape de chauffage consistant à maintenir une tôle d'acier à une température dans la plage de 700 °C à 900 °C ou dans une plage de température de 700 °C à 900 °C pendant 20 à 600 secondes dans une atmosphère ayant une concentration en H₂ dans la plage de 0,05 % à 25,0 % en volume et un point de rosée dans la plage de -45 °C à 0 °C, la tôle d'acier ayant une composition constituée de C : 0,040 % à 0,50 %, Si : 1,00 % ou moins, Cr : 0,10 % à 3,00 %, Mn : 0,80 % à 8,00 %, P : 0,100 % ou moins, S : 0,0100 % ou moins, Al : 0,100 % ou moins, et éventuellement un ou plusieurs parmi Mo : 0,01 % à 0,50 %, Nb : 0,010 % à 0,100 %, B : 0,0001 % à 0,0050 %, Ti : 0,010 % à 0,100 %, Cu : 1,00 % ou moins, V : 0,500 % ou moins, Ni : 0,50 ou moins, N : 0,0100 % ou moins, Sb : 0,10 % ou moins, Sn : 0,10 % ou moins, Ca : 0,0100 % ou moins et terres rares : 0,010 % ou moins, sur une base de pourcentage en masse, le reste étant du Fe et des impuretés inévitables ;
une étape de traitement électrolytique consistant à soumettre la tôle d'acier après la première étape de chauffage à un traitement électrolytique dans une solution aqueuse alcaline à une densité de charge dans la plage de 1,0 à 400 C/dm², la tôle d'acier agissant comme anode ;
une seconde étape de chauffage consistant à maintenir la tôle d'acier après l'étape de traitement électrolytique à une température dans la plage de 650 °C à 900 °C ou dans une plage de température de 650 °C à 900 °C pendant 15 à 300 secondes dans une atmosphère ayant une concentration en H₂ dans la plage de 0,05 % à 25,0 % en volume et un point de rosée inférieur ou égal à 0 °C ; et
une étape de traitement de revêtement consistant à soumettre la tôle d'acier après la seconde étape de chauffage à un traitement de galvanisation par immersion à chaud ; et
éventuellement une étape de décapage consistant à décaper la tôle d'acier, soit après le traitement électrolytique et avant la seconde étape de chauffage, soit après la première étape de chauffage et avant l'étape de traitement électrolytique de sorte qu'une perte de poids au décapage varie de 0,05 à 5 g/m² sur une base de Fe ; où
la quantité de Mn va de 0,80 % à 5,00 %, si aucune étape de décapage n'est effectuée, et la quantité de Cr va de 0,10 % à 2,00 %, si aucune étape de décapage n'est effectuée après la première étape de chauffage et avant l'étape de traitement électrolytique.

2. Procédé de production d'une tôle d'acier de haute résistance galvanisée par immersion à chaud selon la revendication 1, dans lequel le traitement électrolytique dans la solution aqueuse alcaline à l'étape de traitement électrolytique est effectué pendant 2 secondes ou plus.

3. Procédé de production d'une tôle d'acier de haute résistance galvanisée recuite, comprenant la soumission d'une tôle d'acier de haute résistance galvanisée par immersion à chaud à un traitement d'alliation, dans lequel la tôle d'acier de haute résistance galvanisée par immersion à chaud est produite par le procédé selon l'une quelconque des revendications 1 à 2.
